# EUROPÄISCHE PATENTSCHRIFT

(11) **EP 3 308 604 B1**
(45) Veröffentlichungstag und Bekanntmachung des Hinweises auf die Patenterteilung: **07.06.2023**
(21) Anmeldenummer: 16732918.4
(22) Anmeldetag: 06.06.2016
(51) Int. Cl.: H05B 45/10

(54) **GETAKTETE SPERRWANDLERSCHALTUNG**
CLOCKED FLYBACK CONVERTER CIRCUIT
CIRCUIT DE CONVERTISSEURS À OSCILLATEUR BLOQUÉ SYNCHRONISÉS

(30) Priorität: 11.06.2015 DE 102015210710
(43) Veröffentlichungstag der Anmeldung: 18.04.2018
(73) Patentinhaber: Tridonic GmbH & Co KG, 6851 Dornbirn (AT)
(72) Erfinder: MITTERBACHER, Andre, 6850 Dornbirn (AT)
(74) Vertreter: Beder, Jens
(86) Internationale Anmeldenummer: PCT/AT2016/050178
(87) Internationale Veröffentlichungsnummer: WO 2016/197168

(56) Entgegenhaltungen:
- EP-A2- 1 835 605
- WO-A1-2007/135454
- WO-A1-2010/118944
- DE-A1-102011 100 012
- DE-A1-102012 007 479
- DE-A1-102013 207 038
- DE-A1-102013 216 877
- DE-T5-112010 004 983
- US-A1- 2002 180 411
- US-A1- 2012 286 686
- US-A1- 2014 035 476

## Beschreibung

Die vorliegende Erfindung betrifft eine getaktete Sperrwandlerschaltung und ein Verfahren zum Steuern einer getakteten Sperrwandlerschaltung. Die Erfindung betrifft insbesondere einen getakteten Sperrwandler zum direkten Betreiben einer oder mehrerer Leuchtdioden.

Ein Sperrwandler, auch Hoch-Tiefsetzsteller (englisch "flyback converter") genannt, ist ein Gleichspannungswandler, der elektrische Energie zwischen einer Eingangs- und einer Ausgangsseite mittels eines Transformators galvanisch entkoppelt überträgt. Mit einem Sperrwandler kann eine am Eingang zugeführte Gleichspannung mit einem geringen schaltungstechnischen Aufwand in eine Gleichspannung mit einem anderen Spannungsniveau umgewandelt werden.

Aus der WO 2012/167294 A1 ist eine getaktete Sperrwandlerschaltung bekannt, bei der eine Steuereinheit einen die Primärspule des Transformators an Masse angekoppelten Schalter zur Taktung des Sperrwandlers selektiv mit einer bestimmten Frequenz und Einschaltdauer einschaltet und wieder ausschaltet, wobei der durch den steuerbaren Schalter fließende Strom nach dem Ausschalten überwacht wird und ein Wiedereinschalten bei einem Nulldurchgang des Stroms erfolgt. Die WO 2012/167294 A1 schlägt vor, eine solch getaktete Sperrwandlerschaltung zur direkten Speisung einer Leuchtdiode (LED) zu nutzen.

Die WO 2012/167294 A1 offenbart jedoch nicht, wie bei einem direkten Betrieb einer oder mehrerer Leuchtdioden an der Sperrwandlerschaltung, insbesondere ohne eine weitere aktiv getaktete Konverterstufe, ein Dimmen oder Variieren der Abgabeleistung erfolgen kann.

Die Lichtabstrahlung einer Leuchtdiode hängt vom Stromfluss durch die Leuchtdiode ab. Zur Helligkeitssteuerung oder Helligkeitsregelung werden Leuchtdioden daher typischerweise in einem Modus betrieben, in dem der Stromfluss durch die Leuchtdiode von einem Betriebsgerät verändert wird.

Die WO 2013/092734 A1 offenbart einen Konverter zur Helligkeitssteuerung (Dimmen) von Leuchtdioden mittels Pulsweitenmodulation (PWM), bei dem das Tastverhältnis in einem ersten und einem zweiten Dimmbereich mit einer ersten bzw. zweiten konstanten Amplitude des LED-Stroms verändert wird, um einen großen Gesamtdimmbereich abzudecken. Die Helligkeitssteuerung erfolgt hier lediglich nach einer Dimmvorgabe.

Für eine exakte Steuer- oder Regelung insbesondere bei unterschiedlichen Lasten müssen von der Steuereinheit Messgrößen erfasst werden, um ggf. Abweichungen von vorgegebenen Betriebsparametern, wie Lichtfarbe und Helligkeit, oder Verschiebungen im Lichtspektrum bei unterschiedlichen Dimmpegeln, entgegenwirken zu können.

Für die Erfassung der Messgrößen und das Erzeugen von entsprechenden Signalen die der Steuerschaltung zuführbar bzw. von dieser verarbeitbar sind, werden zusätzliche Bauteile/Schaltungen benötigt, was den Aufbau insgesamt komplex und teuer macht.

Eine getaktete Sperrwandlerschaltung gemäß dem Oberbegriff des beigefügten Anspruches 1 ist in der WO 2010/135454 A beschrieben.

Der Erfindung liegt die Aufgabe zugrunde, Vorrichtungen und Verfahren anzugeben, die die beschriebenen Probleme verringern. Aufgabe ist es insbesondere, eine getaktete Sperrwandlerschaltung für den direkten Betrieb von einem oder mehreren Leuchtmitteln und ein Verfahren zum Steuern einer Sperrwandlerschaltung bereitzustellen, die eine genaue Steuerung und Regelung über einen großen Lastbereich mit einem einfachen und kostengünstigen Aufbau erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung enthält eine getaktete Sperrwandlerschaltung zum Betreiben einer oder mehrerer Leuchtmittel einen steuerbaren Schalter, einen Transformator mit einer mit dem steuerbaren Schalter gekoppelten Primärwicklung und einer Sekundärwicklung, an welche die Leuchtmittel ankoppelbar sind, eine Steuereinheit zum Ansteuern des Schalters, und Mittel zum direkten oder indirekten Erfassen des Stroms durch den Schalter im eingeschalteten Zustand und zur Zuführung eines diesen Strom wiedergebenden Signals an die Steuereinheit. Um einen großen Last-/Dimmbereich abzudecken bzw. auch bei geringen Last-/Dimmbereichen eine genaue Steuer- oder Regelung zu ermöglichen, arbeitet die Sperrwandlerschaltung im Grenzbetrieb und bei geringen Last-/Dimmbereichen im diskontinuierlichen Betrieb.

Sobald das den Strom wiedergebende Signal nach dem Einschalten des Schalters eine zur Änderung/Einstellung der durch die Sperrwandlerschaltung zu übertragenden Leistung veränderbare Abschaltschwelle erreicht hat, schaltet die Steuereinheit den Schalter wieder aus. Die Abschaltschwelle wird von der Steuereinheit dabei jedoch nur bis zu einem vorgegebenen Minimalwert verringert und die Steuereinheit geht zur Erzielung einer weiteren Verringerung der durch die Sperrwandlerschaltung zu übertragenden Leistung vom Betrieb im Grenzmodus in den diskontinuierlichen Betrieb mit einer auf den Minimalwert fixierten Abschaltschwelle über.

Das oder die Leuchtmittel können Leuchtdioden sein.

Die Steuereinheit kann so eingerichtet sein, dass sie sowohl im Grenzbetrieb als auch im diskontinuierlichen Betrieb den Schalter ausschaltet, sobald das den Strom wiedergebende Signal die Abschaltschwelle bzw. den vorgegebenen Minimalwert erreicht.

Die Steuereinheit kann einen Komparator zum Vergleichen des den Strom wiedergebenden Signals mit einem den Minimumwert repräsentierenden Signal aufweisen.

Die Steuereinheit kann so ausgebildet sein, dass die Abschaltschwelle in dem Grenzbetrieb und/oder der Zeitpunkt des Wiedereinschaltens des Schalters in dem diskontinuierlichen Betrieb entsprechend einem der Steuereinheit zugeführten Dimmsignal verändert wird.

Der Transformator weist vorteilhaft eine primärseitige Hilfswicklung, an der die Steuereinheit zum Ermitteln eines Verlaufs der über die Hilfswicklung abfallenden Spannung angekoppelt ist, auf, wobei die Steuereinheit in dem diskontinuierlichen Betrieb den Schalter zu einem Zeitpunkt, an dem diese Spannung nach einem Minimum im Spannungsverlauf Null ist, wiedereinschaltet.

Die Steuereinheit ist eingerichtet, in dem diskontinuierlichen Betrieb einen Zeitpunkt für das Wiedereinschalten des Schalters entsprechend der zu übertragenden Leistung zu ermitteln und, wenn in einem Zyklus der Zeitpunkt, an dem die Spannung über die Hilfswicklung nach einem Minimum im Spannungsverlauf Null ist und an dem der Schalter einschaltet wurde, nach dem ermittelten Zeitpunkt liegt, den Schalter in einem nächsten Zyklus zu einem Zeitpunkt, an dem die Spannung über die Hilfswicklung nach einem Minimum im Spannungsverlauf Null ist und der vor dem ermittelten Zeitpunkt liegt, wiedereinzuschalten.

Alternativ oder zusätzlich ist die Steuereinheit eingerichtet, in dem diskontinuierlichen Betrieb einen an die Leuchtmittel abgegebenen Strommittelwert auf Basis des tatsächlichen Zeitpunkts des Wiedereinschaltens des Schalters fortlaufend zu ermitteln und den Strommittelwert auf einen entsprechend der zu übertragenen Leistung vorgegebenen Strommittelwert durch eine Änderung des Zeitpunkts des Wiedereinschaltens zu regeln, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird. Dabei kann der Wiedereinschaltzeitpunkt in jedem Zyklus insbesondere auf einen Nulldurchgang des Spannungsverlaufs nach einem Minimum gefragt werden.

Ein Betriebsgerät für Leuchtdioden gemäß der vorliegenden Erfindung weist eine der oben beschriebenen getakteten Sperrwandlerschaltungen auf.

Gemäß der vorliegenden Erfindung weist ein Verfahren zum Steuern einer einen Transformator aufweisenden getakteten Sperrwandlerschaltung, bei der eine Primärwicklung des Transformators mit einem steuerbaren Schalter und eine Sekundärwicklung des Transformators mit einem oder mehreren Leuchtmitteln gekoppelt ist, die Schritte auf: Ansteuern des Schalters; und Erfassen des durch den Schalter fließenden Stroms und Erzeugen eines diesen Strom wiedergebenden Signals; wobei der Schalter ausgeschaltet wird, wenn das Signal anzeigt, dass der Strom eine veränderbare Abschaltschwelle erreicht hat, und die Abschaltschwelle zur Veränderung der durch die Sperrwandlerschaltung zu übertragenden Leistung verändert wird, wobei die Abschaltschwelle nur bis zu einem Minimalwert verringert wird und zur Erzielung einer weiteren Verringerung der durch die Sperrwandlerschaltung zu übertragenden Leistung bei fixierter Abschaltschwelle vom Betrieb im Grenzmodus in den diskontinuierlichen Betrieb übergegangen wird. Ein Spannungsverlauf einer über eine primärseitige Hilfswicklung des Transformators abfallenden Spannung wird erfasst und in dem diskontinuierlichen Betrieb wird der Schalter zu einem Zeitpunkt eines Wiedereinschaltens, an dem die über die Hilfswicklung abfallende Spannung nach einem Minimum im Spannungsverlauf Null ist, wiedereingeschaltet, wobei ein Zeitpunkt für das Wiedereinschalten des Schalters entsprechend der zu übertragenen Leistung ermittelt wird und, wenn in einem Zyklus ein Zeitpunkt, an dem die über die Hilfswicklung abfallende Spannung nach einem Minimum im Spannungsverlauf Null ist und an dem der Schalter eingeschaltet wurde, nach diesem ermittelten Zeitpunkt liegt, der Schalter in einem nächsten Zyklus zu einem Zeitpunkt, an dem die über die Hilfswicklung abfallende Spannung nach einem Minimum im Spannungsverlauf Null ist und der vor dem ermittelten Zeitpunkt liegt, wiedereingeschaltet wird, und/oder
ein an das bzw. die Leuchtmittel abgegebener Strommittelwert auf Basis eines tatsächlichen Zeitpunkts des Wiedereinschaltens des Schalters fortlaufend ermittelt und auf einen entsprechend der zu übertragenen Leistung vorgegebenen Strommittelwert durch eine Änderung des Zeitpunkts des Wiedereinschaltens geregelt wird, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird.

Nachfolgend wird die Erfindung anhand der beiliegenden Zeichnungen näher erläutert. Es zeigen:
Fig. 1 eine getaktete Sperrwandlerschaltung nach einem ersten Ausführungsbeispiel gemäß der vorliegenden Erfindung.
Fig. 2 ein Diagramm mit Signalverläufen der im Grenzbetriebsmodus betriebenen Sperrwandlerschaltung nach einem Ausführungsbeispiel gemäß der vorliegenden Erfindung,
Fig. 3 ein Diagramm mit Signalverläufen der im diskontinuierlichen Betriebsmodus betriebenen Sperrwandlerschaltung nach einem Ausführungsbeispiel gemäß der vorliegenden Erfindung,
Fig. 4 ein Diagramm mit Verläufen von Steuergrößen im Grenzbetrieb und diskontinuierlichen Betrieb.
Fig. 5 eine getaktete Sperrwandlerschaltung nach einem zweiten Ausführungsbeispiel gemäß der vorliegenden Erfindung.
Fig. 6 ein Betriebsgerät für Leuchtdioden nach einem Ausführungsbeispiel gemäß der vorliegenden Erfindung.

Komponenten mit gleichen Funktionen sind in den Figuren mit gleichen Bezugszeichen gekennzeichnet.

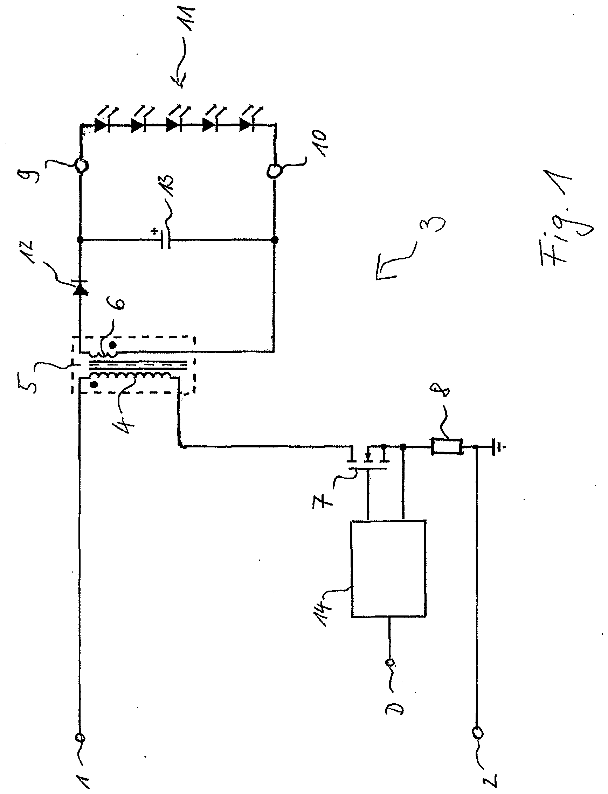

Fig. 1 zeigt eine vereinfachte Schaltung eines getakteten Sperrwandlers zum direkten Betrieb von einem oder mehreren Leuchtmitteln nach einem ersten Ausführungsbeispiel gemäß der vorliegenden Erfindung. An den zwei Eingangsanschlüssen 1, 2 der abgebildeten Sperrwandlerschaltung 3 wird eine Versorgungsspannung zugeführt, die eine Gleichspannung oder eine gleichgerichtete Wechselspannung sein kann.

Die Primärwicklung 4 des Transformators 5, der steuerbare Schalter 7 und ein Messwiderstand 8 sind in Reihe zwischen dem ersten Eingangsanschluss 1 und dem zweiten Eingangsanschluss 2 geschaltet. Der zweite Eingangsanschluss 2 ist mit Masse verbunden. An den zwei Ausgangsanschlüssen 9, 10 der Sperrwandlerschaltung 3 ist eine aus einer Reihenschaltung von im Beispiel fünf LEDs gebildete LED-Strecke 11 angeschlossen. Die Sekundärwicklung 6 des Transformators 5 und eine Diode 12 sind in Reihe zwischen dem ersten Ausgangsanschluss 9 und dem zweiten Ausgangsanschluss 10 geschaltet. Ein Kondensator 13 ist an den Ausgangsanschlüssen 9, 10 parallel angekoppelt. Primär- und Sekundärwicklung 4, 6 des Transformators 5 weisen eine unterschiedliche Polarität/Wicklungsrichtung auf.

Der steuerbare Schalter 7 kann ein Leistungsschalter, ein Feldeffekttransistor oder ein Bipolartransistor sein. Der steuerbare Schalter 7 kann ein Transistor mit isolierter Gateelektrode sein.

Eine mit dem Schalter 7 verbundene Steuereinheit 14 steuert den Schalter 7 an, um diesen ein und auszuschalten.

Der Steuereinheit 14 wird ein Dimmsignal D zur Helligkeitssteuerung der LED-Strecke 11 (Variieren der Abgabeleistung) und ein Signal der über den Messwiderstand 8 abfallenden Spannung zum Erfassen des durch den Schalter 7 fließenden Stroms, zugeführt.

Die Steuereinheit 14 kann eine integrierte Halbleiterschaltung sein oder eine integrierte Halbleiterschaltung umfassen. Die Steuereinheit 14 kann als ein Prozessor, ein Mikroprozessor, ein Controller, ein Mikrocontroller oder eine anwendungsspezifische Spezialschaltung (ASIC, "Application Specific Integrated Circuit") oder eine Kombination der genannten Einheiten ausgestaltet sein.

Bei dem getakteten Sperrwandler 3 wird elektrische Energie zwischen den mittels des Transformators 5 galvanisch getrennten Eingangsanschlüssen 1, 2 und den Ausgangsanschlüssen 9, 10 übertragen. Hierzu schaltet die Steuereinheit 14 den Schalter 7 wiederholt ein und wieder aus. Nach dem Einschalten wird die Primärwicklung 4 des Transformators 5 von Strom durchflossen, die Diode 12 unterdrückt einen Stromfluss auf der Sekundärseite. Nach dem Ausschalten (Sperrphase) wird die in der Primärwicklung 4 gespeicherte Energie über die Sekundärwicklung 6 des Transformators 5 abgegeben bzw. erzwingt einen Stromfluss auf der Sekundärseite durch die Diode 12. Der Kondensator 13 wird geladen, die an den Ausgangsanschlüssen 9, 10 der Sperrwandlerschaltung 1 angeschlossene LED-Strecke 11 leuchtet. Der Stromfluss auf der Sekundärseite nimmt linear ab und wird im diskontinuierlichen (lückenden) Betrieb sowie im Grenzbetrieb schließlich null bevor die Steuereinheit 14 den Schalter 7 wieder einschaltet.

Gemäß der vorliegenden Erfindung erfolgt ein Dimmen bzw. ein Variieren der Abgabeleistung in einem ersten Bereich der Abgabeleistung, in dem der Sperrwandler 3 im Grenzbetrieb/-Modus betrieben wird, durch ein Variieren des Stromwertes, bis zu dem nach dem Einschalten des Schalters 7 der Strom durch die Primärwicklung 4 des Transformators 5 und dem Schalter 7 linear ansteigt. Bei Erreichen dieses vorgegebenen Stromwerts wird der Schalter 7 ausgeschaltet. Die Höhe des vorgegebenen Stromwerts bestimmt in diesem Modus die Helligkeit.

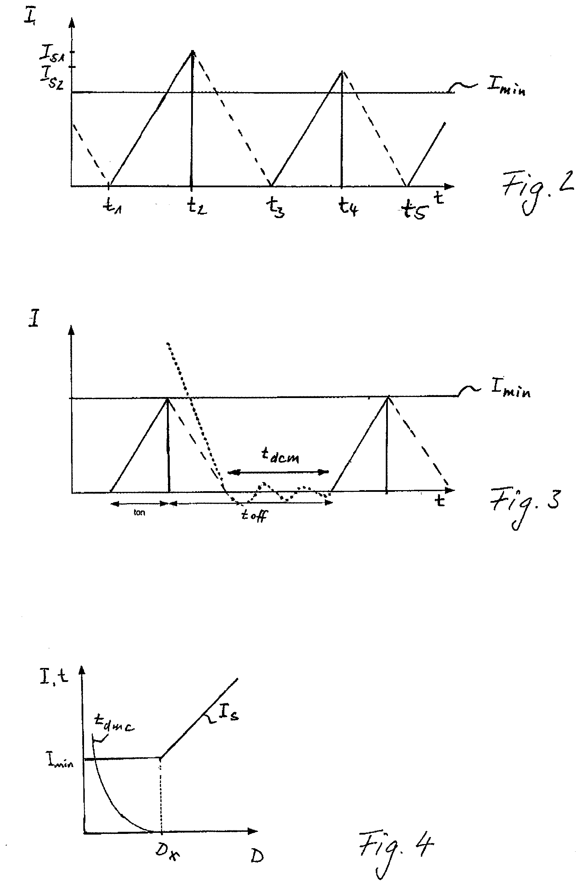

Fig. 2 zeigt in einer vereinfachten Darstellung die zeitlichen Verläufe des Stromes durch die Primärwicklung 4 und den Schalter 7 (durchgezogene Linie) und des Stromes durch die Sekundärwicklung 6 (gestrichelte Linie) des im Grenzbetriebsmodus betriebenen Sperrwandlers 3. Wie in dem Diagramm der Fig. 2 zu sehen, schaltet die Steuereinheit 14 den Schalter 7 zum Zeitpunkt t₁ ein. Der Stromfluss durch den Schalter 7 wird mittels der über den Messwiderstand 8 abfallenden und von der Steuereinheit 14 erfassten Spannung bestimmt.

Nach dem Einschalten zum Zeitpunkt t₁ steigt der Strom durch die Primärwicklung 4 und den Schalter 7 (durchgezogenen Linie) bis zu einem vorgegebenen Stromwert I_{S1}, der von der Steuereinheit 14 auf Basis des Dimmsignals D (Leistungsanforderung) gesetzt wurde, linear an.

Die Steuereinheit 14 vergleicht den aktuellen Schalterstrom bzw. die den Schalterstrom wiedergebende, an dem Widerstand 8 abfallende Spannung mit dem Schwellenwert I_{S1} und bewirkt ein Ausschalten des Schalters 7, sobald der Strom durch den Schalter 7 den Schwellenwert Iₛ₁ (Abschaltschwelle) erreicht.

Zum Zeitpunkt t₂ wird der vorgegebene Stromwert I_{S1} (Schwellenwert) erreicht und die Steuereinheit 14 schaltet den Schalter 7 aus. Der Stromfluss durch die Sekundärwicklung 6 (gestrichelte Linie) beginnt und sinkt zum Zeitpunkt t₃ auf null ab, worauf die Steuereinheit 14 den Schalter 7 wieder einschaltet (Grenzbetrieb). Ein Wiedereinschalten kann auch erst bei einer positiven Flanke (Nulldurchgang) des Spulenstroms erfolgen.

Für den dem Zyklus t1 bis t3 folgenden Zyklus wurde von der Steuereinheit 14 aufgrund einer verringerten Leistungsanforderung über das Dimmsignal D der Abschaltschwellenwert auf I_{S2} abgesenkt, so dass nach dem Einschalten des Schalters 7 zum Zeitpunkt t₃ der Strom durch die Primärwicklung 4 und den Schalter 7 (durchgezogene Linie) wieder ansteigt, aber nur bis zu dem vorgegebenen Stromwert I_{S2}, da die Steuereinheit 14 den Schalter 7 zum Zeitpunkt t₄ ausschaltet und nach dem Absinken des Stroms durch die Sekundärwicklung 6 (gestrichelte Linie) auf null zum Zeitpunkt t₅ wieder einschaltet (Grenzbetrieb).

Gemäß der vorliegenden Erfindung erfolgt bei einer Verringerung der Leistungsanforderung ein Absenken der Abschaltschwelle nur bis zu dem in dem Diagramm der Fig. 2 gezeigten Mindestwert Iₘᵢₙ. Dieser Mindestwert Iₘᵢₙ kann so gewählt sein, dass unterhalb dieses minimalen Abschaltschwellenwerts keine sichere Erfassung/Detektion des geringen Stromflusses durch den Schalter 7 möglich ist.

Wenn bei einer Verringerung der Leistungsanforderung und einem entsprechenden Absenken der Abschaltschwelle die Abschaltschwelle unter dem Mindestwert Iₘᵢₙ liegen würde, wechselt die Steuereinheit 14 also gemäß der vorliegenden Erfindung von dem Grenzbetriebsmodus in den diskontinuierlichen Betriebsmodus. Hierzu vergleicht die Steuereinheit 14 die entsprechend dem Dimmsignal D zu setzende Abschaltschwelle I_{S} mit dem Mindestwert Iₘᵢₙ. In dem diskontinuierlichen Betriebsmodus erfolgt dann die geforderte weitere Verringerung der von dem Sperrwandler 3 abgegebenen Leistung durch eine Verlängerung der Ausschaltzeitdauer des Schalters 7 mit auf den Mindestwert Iₘᵢₙ fixierter Abschaltschwelle.

Fig. 3 zeigt in einem Diagramm die zeitlichen Verläufe des Stromes durch die Primärwicklung 4 und den Schalter 7 (durchgezogene Linie) und des Stromes durch die Sekundärwicklung 6 (gestrichelte Linie) des im diskontinuierlichen Betriebsmodus betriebenen

Sperrwandlers 3. Wie in Fig. 3 gezeigt schaltet die Steuereinheit 14 den Schalter 7 ab, sobald der durch den Schalter 7 fließende Strom (durchgezogene Linie) den Mindestwert Iₘᵢₙ, die fixierte Abschaltschwelle, erreicht hat, und schaltet den Schalter 7 nach dem Absinken des Stroms durch die Sekundärwicklung 6 (gestrichelte Linie) auf null nicht sofort wieder ein, sondern erst nach einer entsprechend der abzugebenden Leistung gesetzten Zeitdauer t_{dcm} nachdem der Strom der Sekundärwicklung 6 (gestrichelte Linie) auf null abgefallen ist. In dem diskontinuierlichen Betriebsmodus wird der Schalter 7 immer beim Erreichen der fixierten Abschaltschwelle ausgeschaltet, eine Erhöhung der Abgabeleistung erfolgt mit einer entsprechenden Verringerung der Zeitdauer t_{dcm} und ein Absenken der Abgabeleistung mit einer entsprechenden Erhöhung der Zeitdauer t_{dcm}.

Wenn bei einer Erhöhung der Leistungsanforderung und einer entsprechenden Verringerung der Zeitdauer t_{dcm} diese unter einem Mindestwert oder bei null liegen würde, wechselt die Steuereinheit 14 gemäß der vorliegenden Erfindung von dem diskontinuierlichen Betriebsmodus in den Grenzbetriebsmodus. Hierzu vergleicht die Steuereinheit 14 die entsprechend dem Dimmsignal D zu setzende Zeitdauer t_{dcm} mit dem Mindestwert bzw. prüft, ob die Zeitdauer t_{dcm} null oder nahezu null ist.

Fig. 4 verdeutlicht den Übergang zwischen den verschiedenen Betriebsmodi. In dem in Fig. 4 gezeigten Diagramm sind der von der Steuereinheit 14 zu setzende Schwellenwert Iₛ sowie die von der Steuereinheit 14 zu setzende Zeitdauer t_{dcm} als Funktion des Pegels des der Steuereinheit 14 zugeführten Dimmsignals D dargestellt. Wie in dem in Fig. 4 gezeigten Diagramm zu sehen ist, steigt oberhalb eines Pegels Dₓ der zu setzende Abschaltschwellenwert Iₛ linear mit einer Erhöhung des Pegels des Dimmsignals D an, während die Zeitdauer t_{dcm} null ist. Unterhalb des Pegels Dₓ ist der zu setzende Abschaltschwellenwert Iₛ konstant bzw. auf den Mindestwert Iₘᵢₙ fixiert, während die Zeitdauer t_{dcm} mit einem Absenken des Pegels des Dimmsignals D unter Dₓ nichtlinear ansteigt. Die dargestellten Verläufe können von der Steuereinheit 14 berechnet werden oder in Form einer Tabelle vorab in der Steuereinheit 14 abgelegt sein.

In dem diskontinuierlichen Betrieb können nach dem Ausschalten des Schalters 7 Oszillationen der Spannung über der primärseitigen Spule 4 aufgrund von parasitären Effekten auftreten. Um Schaltverluste des Schalters 7 zu vermeiden, sollten solche Oszillationen beim Wählen des Wiedereinschaltzeitpunktes berücksichtigt werden bzw. der Wiedereinschaltzeitpunkt so gewählt werden, dass zum Wiedereinschaltzeitpunkt die Spannungsschwingung auf einen Nulldurchgang nach einem Spannungsminimum fällt.

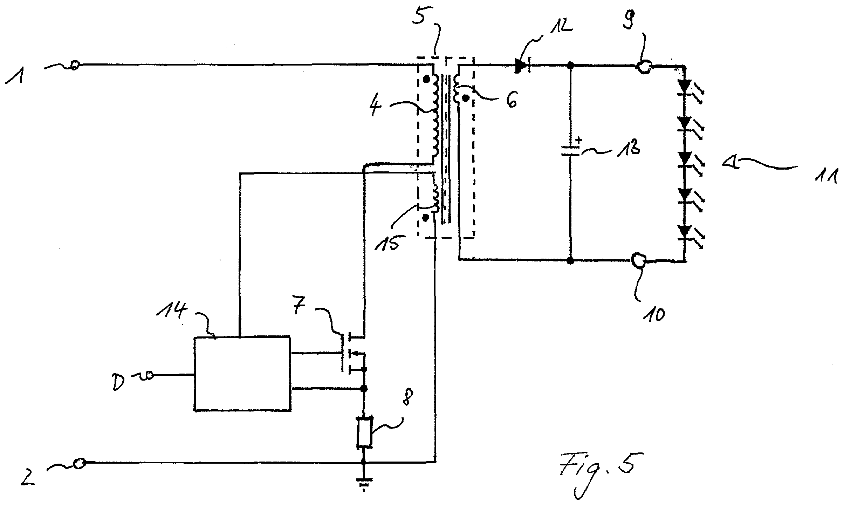

Fig. 5 zeigt eine getaktete Sperrwandlerschaltung nach einem zweiten Ausführungsbeispiel gemäß der vorliegenden Erfindung, bei der der Transformator 5 eine primärseitige Hilfswicklung 15 zum Erfassen dieses Spannungsverlaufs aufweist. Die Hilfswicklung 15 ist mit dem zweiten Eingangsanschluss 2 und der Steuereinrichtung 15 verbunden. Die Steuereinheit 14 ermittelt in dem diskontinuierlichen Betrieb mittels des von der Hilfswicklung 15 erzeugten Spannungssignals den Zeitpunkt an dem die Spannungsverlauf einen Nulldurchgang nach einem Minimum aufweist, um den Schalter zu diesem Zeitpunkt wiedereinzuschalten.

In dem in Fig. 3 gezeigten Diagramm ist die Oszillation des Spannungssignals nach dem Ausschalten als gepunktete Linie gezeigt. Soll das Wiedereinschalten des Schalters 7 unter Berücksichtigung der erfassten Oszillation erfolgen, bedeutet dies jedoch, dass das Wiedereinschalten des Schalters 5 nicht zu einem beliebigen Zeitpunkt erfolgen kann, sondern nur in diskreten Zeitabständen, nämlich immer dann, wenn die Spannungsschwingung einen Nulldurchgang hat.

Wird der Schalter 7 auf Grund dieser Spannungsschwingungen und dem sich daraus ergebenden Wiedereinschaltzeitpunkt beim Nulldurchgang nicht genau zu dem von der Steuereinheit 14 gemäß der Lastanforderung ermittelten Zeitpunkt wiedereingeschaltet, kann die vorgegebene Leistung, der vorgegebene zeitliche Mittelwert des sekundärseitig abgegebenen Stroms I_{avg}, für diesen Wiedereinschaltzyklus nicht exakt erreicht werden und fällt, wenn zum Beispiel erst zu einem nächstmöglichen diskreten Zeitpunkt später wiedereingeschaltet wird, niedriger aus.

Zur Kompensation dieses Fehlers kann die Steuereinheit 14 den Schalter 7 beim nächsten Zyklus zu einem diskreten Zeitpunkt, der vor dem gemäß der Lastanforderung ermittelten Zeitpunkt liegt, (vorfristig) wiedereinschalten, so dass sich ein vorfristiges Wiedereinschalten und ein Wiedereinschalten zu einem diskreten Zeitpunkt, der nach dem gemäß der Lastanforderung ermittelten Zeitpunkt liegt, abwechseln.

Die Steuereinheit 14 kann dazu ausgelegt sein, die Größe des Fehlers, d.h. die Abweichung zwischen dem gemäß der Lastanforderung ermittelten Zeitpunkt und den tatsächlichen Zeitpunkt des Wiedereinschaltens zu bestimmen und das vorfristige Wiedereinschalten ab einer bestimmten Größe des Fehlers auszulösen. Der Fehler kann für nur einen Wiedereinschaltzyklus bestimmt oder für mehrere Zyklen aufsummiert werden, wobei ein vorfristiges Wiedereinschalten für einen nächsten Wiedereinschaltzyklus ausgelöst wird, sobald der aufsummierte Fehler (Gesamtfehler) der aufeinanderfolgenden Zyklen einen bestimmten Wert erreicht.

Alternativ oder zusätzlich kann die Steuereinheit 14 den tatsächlichen, aktuellen Strommittelwert I_{avg} auf Basis des tatsächlichen Zeitpunkts des Wiedereinschaltens fortlaufend ermitteln und den Strommittelwert I_{avg} durch eine entsprechende Anpassung/Änderung der Zeitdauer t_{dcm} regeln, wobei eine Differenz zwischen dem vorgegebenen Strommittelwert für den letzten Wiedereinschaltzyklus und dem tatsächlichen Strommittelwert I_{avg} des letzten Wiedereinschaltzyklus gebildet und diese Differenz zu dem vorgegebenen Strommittelwert für den nächsten Wiedereinschaltzyklus addiert werden kann.

Gemäß der vorliegenden Erfindung kann ein Abwechseln von dem diskontinuierlichen Betriebsmodus und dem Grenzbetriebsmodus erfolgen, wenn die durch die LED(s) gebildete Last so niedrig ist, dass die sich bei einem Grenzbetriebsmodus ergebende obere Abschaltschwelle Iₛ unter dem vorgegeben Mindestwert Iₘᵢₙ liegen würde.

Dieses Abwechseln kann insbesondere in einem Übergangsbereich zu einem genaueren Strommittelwert I_{avg} über zwei Wiedereinschaltzyklen/Perioden führen, da ein aus dem diskontinuierlichen Betriebsmodus resultierender, zu niedriger Strommittelwert I_{avg} (Wiedereinschalten bei einem nächstmöglichen diskreten, späteren Zeitpunkt) mit dem im darauffolgenden Grenzbetriebsmodus zu hohen Strommittelwert I_{avg} ausgeglichen werden kann.

Das Ende des Wechselbetriebs bzw. der Übergang vom Wechselbetrieb zu einem fortwährenden diskontinuierlichen Betriebsmodus kann mittels eines empfangenen Steuersignals ausgelöst werden oder von dem Pegel des Dimmsignals D oder der Länge des Zeitdauer t_{dcm} des diskontinuierlichen Betriebsmodus abhängig sein, wobei ein Ende eines Wechselbetriebs bzw. der Übergang vom Wechselbetrieb zu einem fortwährenden diskontinuierlichen Betriebsmodus erfolgt, wenn die Länge einen Maximalwert annimmt.

In gleicher Weise kann ein Übergang vom einem weiteren fortwährenden diskontinuierlichen Betriebsmodus zu dem Wechselbetrieb mittels eines empfangenen Steuersignals ausgelöst werden oder von dem Pegel des Dimmsignals D oder der Länge des Zeitdauer t_{dcm} des diskontinuierlichen Betriebsmodus abhängig sein, wobei ein Start eines Wechselbetriebs bzw. der Übergang vom einem fortwährenden diskontinuierlichen Betriebsmodus zum Wechselbetrieb erfolgt, wenn die Länge einen Minimalwert annimmt. Der Minimalwert und der Maximalwert können gleich sein.

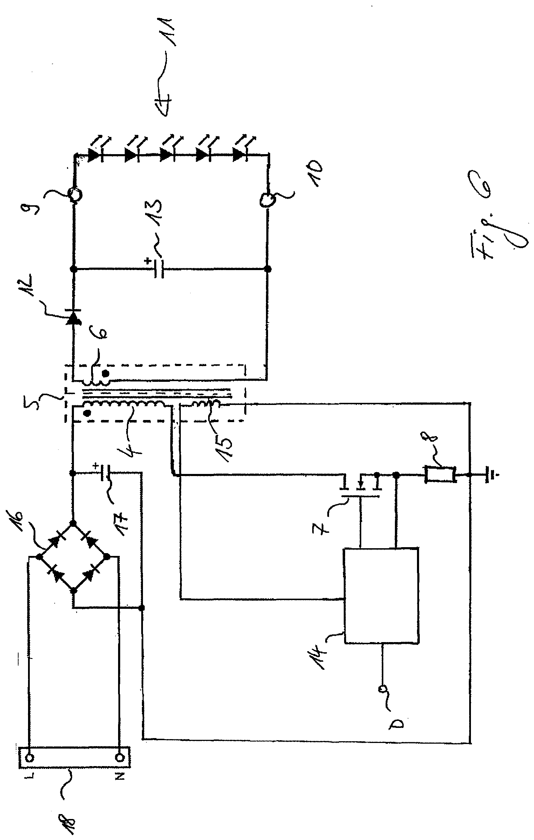

Fig. 6 zeigt ein Betriebsgerät für Leuchtdioden nach einem Ausführungsbeispiel gemäß der vorliegenden Erfindung. Das Betriebsgerät weist die in Fig. 5 gezeigte getaktete Sperrwandlerschaltung und einen aus einer Diodenschaltung 16 und einem Ladekondensator 17 bestehenden Gleichrichter für die Gleichrichtung einer an den Eingangsanschluss 18 zugeführten Wechselspannung auf. Das Betriebsgerät kann eine zwischen der Diodenschaltung 16 und dem Ladekondensator 17 angeordnete Leistungsfaktorkorrekturschaltung (nicht gezeigt) umfassen.

Die LEDs der an den Ausgangsanschlüssen 8, 10 angeschlossenen LED-Strecke 11 können anorganische oder organische LEDs sein. Die LEDs können in Serie oder parallel geschaltet sein. Die mehreren LEDs können auch in komplexeren Anordnungen verschaltet sein, beispielsweise in mehreren zueinander parallel geschalteten Reihenschaltungen. Während beispielhaft fünf LEDs dargestellt sind, kann das Leuchtmittel bzw. die LED-Strecke 11 auch mehr oder weniger LEDs aufweisen.

Das Betriebsgerät kann alternativ die in Fig. 1 gezeigte Sperrwandlerschaltung aufweisen.

## Patentansprüche

1. Getaktete Sperrwandlerschaltung zum Betreiben eines oder mehrerer Leuchtmittel (11), aufweisend
einen steuerbaren Schalter (7),
einen Transformator (5) mit einer Primärwicklung (4), welche mit dem Schalter (7) gekoppelt ist, und einer Sekundärwicklung (6), an welche die Leuchtmittel (11) ankoppelbar sind,
eine Steuereinheit (14) zum Ansteuern des Schalters (7), und
Mittel (8) zum direkten oder indirekten Erfassen des Stroms durch den Schalter (7) im eingeschalteten Zustand und zur Zuführung eines diesen Strom wiedergebenden Signals an die Steuereinheit (14), wobei
die Steuereinheit (14) dazu ausgelegt ist, den Schalter (7) auszuschalten, wenn das zugeführte, den Strom wiedergebende Signal eine Abschaltschwelle (I_{S}), die veränderbar ist, erreicht hat,
**dadurch gekennzeichnet, dass**
die Steuereinheit (14) dazu ausgelegt ist, die Abschaltschwelle (I_{S}) zur Veränderung der durch die Sperrwandlerschaltung (3) übertragenen Leistung zu verändern, und die Abschaltschwelle (I_{S}) für das Stromsignal nur bis zu einen Minimalwert (Iₘᵢₙ) zu verringern und zur Erzielung einer weiteren Verringerung der durch die Sperrwandlerschaltung (3) übertragenen Leistung bei fixierter Abschaltschwelle (I_{S}) auf den Minimalwert (Iₘᵢₙ) vom Betrieb im Grenzmodus in den diskontinuierlichen Betrieb überzugehen,
der Transformator (5) eine primärseitige Hilfswicklung (15), an der die Steuereinheit (14) zum Erfassen eines Spannungsverlaufs einer über die Hilfswicklung (15) abfallenden Spannung angekoppelt ist, aufweist, und
die Steuereinheit (14) eingerichtet ist, in dem diskontinuierlichen Betrieb den Schalter zu einem Zeitpunkt eines Wiedereinschaltens, an dem die über die Hilfswicklung (15) abfallende Spannung nach einem Minimum im erfassten Spannungsverlauf Null ist, wiedereinzuschalten, wobei
die Steuereinheit (14) eingerichtet ist, in dem diskontinuierlichen Betrieb den Zeitpunkt für das Wiedereinschalten des Schalters (7) entsprechend der zu übertragenen Leistung zu ermitteln und, wenn in einem Zyklus ein tatsächlicher Zeitpunkt, an dem die über die Hilfswicklung (15) abfallende Spannung nach einem Minimum im erfassten Spannungsverlauf Null ist und an dem der Schalter (7) eingeschaltet wurde, nach diesem ermittelten Zeitpunkt liegt, den Schalter (7) in einem nächsten Zyklus zu einem weiteren tatsächlichen Zeitpunkt, an dem die über die Hilfswicklung (15) abfallende Spannung nach einem Minimum im erfassten Spannungsverlauf Null ist und der vor dem ermittelten Zeitpunkt liegt, wiedereinzuschalten und/oder
die Steuereinheit (14) eingerichtet ist, in dem diskontinuierlichen Betrieb einen an das bzw. die Leuchtmittel (11) abgegebenen Strommittelwert auf Basis des tatsächlichen Zeitpunkts des Wiedereinschaltens des Schalters (7) fortlaufend zu ermitteln und den Strommittelwert auf einen entsprechend der zu übertragenen Leistung vorgegebenen Strommittelwert durch eine Änderung des Zeitpunkts des Wiedereinschaltens zu regeln, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird.

2. Getaktete Sperrwandlerschaltung nach Anspruch 1, wobei
die Steuereinheit (14) dazu ausgelegt ist, im diskontinuierlichen Betrieb eine Zeitdauer (t_{dcm}) zwischen einem Zeitpunkt, an dem ein Strom der Sekundärwicklung (6) auf null abgesunken ist und dem ermittelten Zeitpunkt des Wiedereinschaltens des Schalters (7) zur Veränderung der durch die Sperrwandlerschaltung (3) übertragenen Leistung zu verändern, die Zeitdauer (t_{dcm}) nur bis zu einer Minimal-Zeitdauer zu verringern und zur Erzielung einer weiteren Erhöhung der durch die Sperrwandlerschaltung (3) übertragenen Leistung vom diskontinuierlichen Betrieb in den Betrieb im Grenzmodus zu wechseln.

3. Getaktete Sperrwandlerschaltung nach Anspruch 1 oder 2, wobei
wobei die Steuereinheit (14) so eingerichtet ist, dass sie sowohl im Grenzmodus als auch im diskontinuierlichen Betrieb auf Basis des zugeführten, den Strom wiedergebenden Signals den Schalter (7) ansteuert.

4. Getaktete Sperrwandlerschaltung nach einem der Ansprüche 1 bis 3, wobei
die Steuereinheit (14) einen Komparator zum Vergleichen des den Strom wiedergebenden Signals mit einem den Minimalwert (Iₘᵢₙ) repräsentierenden Signal aufweist.

5. Getaktete Sperrwandlerschaltung nach einem der Ansprüche 1 bis 4, wobei
der Steuereinheit (14) ein Dimmsignal (D) zuführbar ist und die Steuereinheit (14) eingerichtet ist, in dem Grenzmodus die Abschaltschwelle (I_{S}) entsprechend dem Dimmsignal zu ändern und in dem diskontinuierlichen Betrieb den ermittelten Zeitpunkt des Wiedereinschaltens des Schalters entsprechend dem Dimmsignal (D) bei fixierter Abschaltschwelle (I_{S}) auf den Minimalwert (Iₘᵢₙ) zu ändern.

6. Betriebsgerät für Leuchtdioden, aufweisend eine getaktete Sperrwandlerschaltung (3) nach einem der Ansprüche 1 bis 5.

7. Verfahren zum Steuern einer einen Transformator (5) aufweisenden getakteten Sperrwandlerschaltung (3), bei der eine Primärwicklung (4) des Transformators mit einem steuerbaren Schalter (7) und eine Sekundärwicklung (2) des Transformators (5) mit einem oder mehreren Leuchtmitteln (11) gekoppelt ist, mit den Schritten:
Ansteuern des Schalters (7); und
Erfassen des durch den Schalter (7) fließenden Stroms und Erzeugen eines diesen Strom wiedergebenden Signals; wobei
der Schalter (7) ausgeschaltet wird, wenn das Signal anzeigt, dass der Strom eine Abschaltschwelle (I_{S}), die veränderbar ist, erreicht hat,
**dadurch gekennzeichnet, dass**
die Abschaltschwelle (I_{S}) zur Veränderung der durch die Sperrwandlerschaltung (3) zu übertragenden Leistung verändert wird,
die Abschaltschwelle (I_{S}) nur bis zu einem Minimalwert (Iₘᵢₙ) verringert wird und zur Erzielung einer weiteren Verringerung der durch die Sperrwandlerschaltung (3) zu übertragenden Leistung bei fixierter Abschaltschwelle auf den Minimalwert (Iₘᵢₙ) vom Betrieb im Grenzmodus in den diskontinuierlichen Betrieb übergegangen wird, und
ein Spannungsverlauf einer über eine primärseitige Hilfswicklung (15) des Transformators (5) abfallenden Spannung erfasst wird und in dem diskontinuierlichen Betrieb der Schalter zu einem Zeitpunkt eines Wiedereinschaltens, an dem die über die Hilfswicklung (15) abfallende Spannung nach einem Minimum im Spannungsverlauf Null ist, wiedereingeschaltet wird, wobei
der Zeitpunkt für das Wiedereinschalten des Schalters (7) entsprechend der zu übertragenen Leistung ermittelt wird und, wenn in einem Zyklus ein tatsächlicher Zeitpunkt, an dem die über die Hilfswicklung (15) abfallende Spannung nach einem Minimum im erfassten Spannungsverlauf Null ist und an dem der Schalter (7) eingeschaltet wurde, nach diesem ermittelten Zeitpunkt liegt, der Schalter (7) in einem nächsten Zyklus zu einem weiteren tatsächlichen Zeitpunkt, an dem die über die Hilfswicklung (15) abfallende Spannung nach einem Minimum im erfassten Spannungsverlauf Null ist und der vor dem ermittelten Zeitpunkt liegt, wiedereingeschaltet wird, und/oder
ein an das bzw. die Leuchtmittel (11) abgegebener Strommittelwert auf Basis des tatsächlichen Zeitpunkts des Wiedereinschaltens des Schalters (7) fortlaufend ermittelt und auf einen entsprechend der zu übertragenen Leistung vorgegebenen Strommittelwert durch eine Änderung des Zeitpunkts des Wiedereinschaltens geregelt wird, wobei eine Differenz zwischen dem vorgegebenen Strommittelwert für einen Wiedereinschaltzyklus und dem tatsächlichen Strommittelwert des Wiedereinschaltzyklus gebildet und diese Differenz zu dem vorgegebenen Strommittelwert für den nächsten Wiedereinschaltzyklus addiert wird.

## Claims

1. Clocked flyback converter circuit for operating one or more lighting means (11), comprising:
a controllable switch (7),
a transformer (5) having a primary winding (4) coupled to the switch (7) and a secondary winding (6) to which the lighting means (11) can be coupled,
a control device (14) for controlling the switch (7), and
means (8) for directly or indirectly detecting the current through the switch (7) in the switched-on state and for supplying a signal representing this current to the control unit (14), wherein
the control unit (14) being configured to switch off the switch (7) when the supplied signal representing the current has reached a variable switch-off threshold (Is),
**characterized in that**
the control unit (14) is configured to modify the switch-off threshold (I_{S}) in order to modify the power transmitted by the flyback converter circuit (3), and is configured to reduce the switch-off threshold (Is) for the current signal only up to a minimum value (Iₘᵢₙ) and to transition from operating in the limit mode into the discontinuous operation in order to achieve a further reduction of the power transmitted by the flyback converter circuit (3) when the switch-off threshold (I_{S}) is fixed at the minimum value (Iₘᵢₙ),
the transformer (5) has a primary-side auxiliary winding (15), to which the control device (14) is coupled for detecting a voltage curve of a voltage decreasing across the auxiliary winding (15), and
the control unit (14) is configured, during discontinuous operation, to turn the switch back on at a time of switching back on at which the voltage dropping across the auxiliary winding (15) is zero after a minimum in the detected voltage curve,
the control unit (14) being configured, during the discontinuous operation, to determine the time for switching the switch (7) back on according to the power to be transmitted, and if, in a cycle, an actual time at which the voltage dropping across the auxiliary winding (15) is zero after a minimum in the detected voltage curve and at which the switch (7) has been switched on is after this determined time, the control unit being configured to switch the switch (7) back on, in a subsequent cycle, at a further actual time at which the voltage dropping across the auxiliary winding (15) is zero after a minimum in the detected voltage curve and which is before the determined time, and/or
the control unit (14) being configured, during the discontinuous operation, to continuously determine, on the basis of the actual time at which the switch (7) is switched back on, a mean current value that is output to the lighting means (11) and to regulate the mean current value to a mean current value specified according to the power to be transmitted by modifying the time of switching back on, a difference between the specified mean current value for a cycle of switching back on and the actual mean current value of the cycle of switching back on being formed and this difference being added to the specified mean current value for the subsequent cycle of switching back on.

2. Clocked flyback converter circuit according to claim 1, wherein the control unit (14) is configured, during the discontinuous operation, to modify a duration (t_{dcm}) between a time at which a current of the secondary winding (6) has dropped to zero and the determined time of switching the switch (7) back on in order to modify the power transmitted by the flyback converter circuit (3), to reduce the duration (t_{dcm}) only up to a minimum duration, and to change from a discontinuous operation to operation in the limit mode in order to achieve a further increase of the power transmitted by the flyback converter circuit (3).

3. Clocked flyback converter circuit according to claim 1 or 2, wherein
wherein the control unit (14) is configured such that it controls the switch (7) both in the limit mode and during discontinuous operation on the basis of the supplied signal representing the current.

4. Clocked flyback converter circuit according to any of claims 1 to 3, wherein
the control unit (14) comprises a comparator for comparing the signal representing the current with a signal representing the minimum value (Iₘᵢₙ).

5. Clocked flyback converter circuit according to any of claims 1 to 4, wherein
a dimming signal (D) can be supplied to the control unit (14), and the control unit (14) is configured, in the limit mode, to modify the switch-off threshold (Is) according to the dimming signal and, during the discontinuous operation, to modify the determined time of switching the switch back on according to the dimming signal (D) when the switch-off threshold (I_{S}) is fixed at the minimum value (Iₘᵢₙ).

6. Operating device for light-emitting diodes, comprising a clocked flyback converter circuit (3) according to any of claims 1 to 5.

7. Method for controlling a clocked flyback converter circuit (3) having a transformer (5), in which clocked flyback converter circuit a primary winding (4) of the transformer is coupled to a controllable switch (3) and a secondary winding (2) of the transformer (5) is coupled to one or more lighting means (11), the method comprising the steps of:
controlling the switch (7); and
detecting the current flowing through the switch (7) and generating a signal representing this current;
the switch (7) being switched off when the signal indicates that the current has reached a variable switch-off threshold (Is),
**characterized in that**
the switch-off threshold (Is) is modified in order to modify the power to be transmitted by the flyback converter circuit (3),
the switch-off threshold (Is) is reduced only up to a minimum value (Iₘᵢₙ) and is transitioned from operation in the limit mode into the discontinuous operation in order to achieve a further reduction of the power to be transmitted by the flyback converter circuit (3) when the switch-off threshold is fixed at the minimum value (Iₘᵢₙ), and
a voltage curve of a voltage dropping across a primary-side auxiliary winding (15) of the transformer (5) is detected and, during the discontinuous operation, the switch is switched back on at a time of switching back on at which the voltage dropping across the auxiliary winding (15) is zero after a minimum in the voltage curve, the time for switching the switch (7) back on being determined according to the power to be transmitted and if, in a cycle, an actual time at which the voltage dropping across the auxiliary winding (15) is zero after a minimum in the detected voltage curve and at which the switch (7) has been switched on is after this determined time, the switch (7) being switched back on in a subsequent cycle at a further actual time at which the voltage dropping over the auxiliary winding (15) is zero after a minimum in the detected voltage curve and which is before the determined time and/or a mean current value which is output to the lighting means (11) being continuously determined on the basis of the actual time at which the switch (7) is switched back on, and being regulated to a mean current value specified according to the power to be transmitted by modifying the time of switching back on, a difference between the specified mean current value for a cycle of switching back on and the actual mean current value of the cycle of switching back on being formed and this difference being added to the specified mean current value for the subsequent cycle of switching back on.

## Revendications

1. Circuit de convertisseur à oscillateur bloqué cadencé permettant de faire fonctionner un ou plusieurs moyens lumineux (11), présentant
un commutateur (7) commandable,
un transformateur (5) comportant un enroulement primaire (4), lequel est couplé au commutateur (7), et un enroulement secondaire (6), auquel les moyens lumineux (11) peuvent être couplés,
une unité de commande (14) pour la commande du commutateur (7), et
des moyens (8) pour la détection directe ou indirecte du courant traversant le commutateur (7) à l'état activé et pour la fourniture d'un signal reproduisant ledit courant à l'unité de commande (14), dans lequel
l'unité de commande (14) est configurée pour désactiver le commutateur (7) lorsque le signal acheminé reproduisant le courant a atteint un seuil de coupure (Is) qui est modifiable,
**caractérisé en ce que**
l'unité de commande (14) est configurée pour modifier le seuil de coupure (Is) pour la modification de la puissance transmise par le circuit de convertisseur à oscillateur bloqué (3) et pour réduire le seuil de coupure (Is) pour le signal de courant uniquement jusqu'à une valeur minimale (Iₘᵢₙ) et pour passer d'un fonctionnement en mode limite à un fonctionnement discontinu pour atteindre une réduction supplémentaire de la puissance transmise par le circuit de convertisseur à oscillateur bloqué (3) lorsque le seuil de coupure (Is) est fixé à la valeur minimale (Iₘᵢₙ),
le transformateur (5) présente un enroulement auxiliaire (15) côté primaire, auquel l'unité de commande (14) est couplée pour la détection d'une courbe de tension d'une tension en chute sur l'enroulement auxiliaire (15) et
l'unité de commande (14) est configurée pour réactiver le commutateur dans le fonctionnement discontinu jusqu'à un moment d'une réactivation auquel la tension en chute sur l'enroulement auxiliaire (15) est nulle après un minimum dans la courbe de tension détectée, dans lequel
l'unité de commande (14) est configurée pour déterminer, dans le fonctionnement discontinu, le moment pour la réactivation du commutateur (7) en fonction de la puissance à transmettre et, lorsque dans un cycle, un moment effectif, auquel la tension en chute sur l'enroulement auxiliaire (15) est nulle après un minimum dans la courbe de tension détectée et auquel le commutateur (7) a été activé, se trouve après ledit moment déterminé, pour réactiver le commutateur (7) dans un cycle suivant jusqu'à un moment effectif supplémentaire, auquel la tension en chute sur l'enroulement auxiliaire (15) est nulle après un minimum dans la courbe de tension détectée et qui se trouve avant le moment déterminé, et/ou
l'unité de commande (14) est configurée pour déterminer en continu, dans le fonctionnement discontinu, une valeur moyenne de courant fournie au ou aux moyens lumineux (11) sur la base du moment effectif de la réactivation du commutateur (7) et pour réguler la valeur moyenne de courant sur une valeur moyenne de courant prédéfinie en fonction de la puissance à transmettre par une modification du moment de la réactivation, dans lequel une différence entre la valeur moyenne de tension prédéfinie pour un cycle de réactivation et la valeur moyenne de courant effective du cycle de réactivation est formée et ladite différence est ajoutée à la valeur moyenne de courant prédéfinie pour le cycle de réactivation suivant.

2. Circuit de convertisseur à oscillateur bloqué cadencé selon la revendication 1, dans lequel l'unité de commande (14) est configurée pour, dans le fonctionnement discontinu, modifier une durée (t_{dcm}) entre un moment, auquel un courant de l'enroulement secondaire (6) a chuté à zéro, et le moment déterminé de la réactivation du commutateur (7) pour la modification de la puissance transmise par le circuit de convertisseur à oscillateur bloqué (3), réduire la durée (t_{dcm}) uniquement jusqu'à une durée minimale et, pour atteindre une augmentation supplémentaire de la puissance transmise par le circuit de convertisseur à oscillateur bloqué (3), changer du fonctionnement discontinu au fonctionnement en mode limite.

3. Circuit de convertisseur à oscillateur bloqué cadencé selon la revendication 1 ou 2, dans lequel
dans lequel l'unité de commande (14) est configurée de manière à commander, aussi bien dans le mode limite que dans le fonctionnement discontinu, le commutateur (7) sur la base du signal fourni reproduisant le courant.

4. Circuit de convertisseur à oscillateur bloqué cadencé selon l'une des revendications 1 à 3, dans lequel
l'unité de commande (14) présente un comparateur pour la comparaison du signal reproduisant le courant avec un signal représentant la valeur minimale (Iₘᵢₙ).

5. Circuit de convertisseur à oscillateur bloqué cadencé selon l'une des revendications 1 à 4, dans lequel
un signal de gradation (D) peut être fourni à l'unité de commande (14) et l'unité de commande (14) est configurée pour modifier, dans le mode limite, le seuil de coupure (Is) en fonction du signal de gradation et, dans le fonctionnement discontinu, modifier le moment déterminé de la réactivation du commutateur en fonction du signal de gradation (D) lorsque le seuil de coupure (Is) est fixé à la valeur minimale (Iₘᵢₙ).

6. Dispositif de fonctionnement pour des diodes électroluminescentes, présentant un circuit de convertisseur à oscillateur bloqué (3) cadencé selon l'une des revendications 1 à 5.

7. Procédé de commande d'un circuit de convertisseur à oscillateur bloqué (3) cadencé présentant un transformateur (5), dans lequel un enroulement primaire (4) du transformateur est couplé à un commutateur (7) commandable et un enroulement secondaire (2) du transformateur (5) est couplé à un ou plusieurs moyens lumineux (11), comportant les étapes de :
commande du commutateur (7) ; et
détection du courant circulant à travers le commutateur (7) et génération d'un signal reproduisant ledit courant ; dans lequel
le commutateur (7) est désactivé lorsque le signal indique que le courant a atteint un seuil de coupure (Iₛ) qui est modifiable,
**caractérisé en ce que**
le seuil de coupure (Is) est modifié pour la modification de la puissance à transmettre par le circuit de convertisseur à oscillateur bloqué (3),
le seuil de coupure (Is) est réduit uniquement jusqu'à une valeur minimale (Iₘᵢₙ) et, pour obtenir une réduction supplémentaire de la puissance à transmettre par le circuit de convertisseur à oscillateur bloqué (3) lorsque le seuil de coupure est fixé à la valeur minimale (Iₘᵢₙ), une transition est effectuée du fonctionnement en mode limite au fonctionnement discontinu, et
une courbe de tension d'une tension en chute sur un enroulement auxiliaire (15) côté primaire du transformateur (5) est détectée et, dans le fonctionnement discontinu, le commutateur est réactivé jusqu'à un moment d'une réactivation auquel la tension en chute sur l'enroulement auxiliaire (15) est nulle après un minimum dans la courbe de tension, dans lequel le moment pour la réactivation du commutateur (7) est déterminé en fonction de la puissance à transmettre et, lorsque dans un cycle, un moment effectif, auquel la tension en chute sur l'enroulement auxiliaire (15) est nulle après un minimum dans la courbe de tension détectée et auquel le commutateur (7) a été activé, se trouve après ledit moment déterminé, le commutateur (7) est réactivé dans un cycle suivant jusqu'à un moment effectif supplémentaire, auquel la tension en chute sur l'enroulement auxiliaire (15) est nulle après un minimum dans la courbe de tension détectée et qui se trouve avant le moment déterminé, et/ou une valeur moyenne de tension fournie au ou aux moyens lumineux (11) est déterminée en continu sur la base du moment effectif de la réactivation du commutateur (7) et est régulée sur une valeur moyenne de courant prédéfinie en fonction de la puissance à transmettre par une modification du moment de la réactivation, dans lequel une différence entre la valeur moyenne de courant prédéfinie pour un cycle de réactivation et la valeur moyenne de courant effective du cycle de réactivation est formée et ladite différence est ajoutée à la valeur moyenne de courant prédéfinie pour le cycle de réactivation suivant.
